# EUROPÄISCHE PATENTSCHRIFT

(11) **EP 3 317 975 B1**
(45) Veröffentlichungstag und Bekanntmachung des Hinweises auf die Patenterteilung: **29.01.2020**
(21) Anmeldenummer: 16739042.6
(22) Anmeldetag: 28.06.2016
(51) Int. Cl.: H04B 5/00, H04B 17/318, G06K 7/10, G06K 19/07

(54) **MESSKARTE ZUR ERFASSUNG EINES MESSWERTES EINES ELEKTROMAGNETISCHEN FELDES**
MEASUREMENT CARD FOR CAPTURING A MEASURED VALUE FOR AN ELECTROMAGNETIC FIELD
CARTE DE MESURE POUR LA DÉTECTION D'UNE VALEUR DE MESURE D'UN CHAMP ÉLECTROMAGNÉTIQUE

(30) Priorität: 03.07.2015 DE 102015110784
(43) Veröffentlichungstag der Anmeldung: 09.05.2018
(73) Patentinhaber: Bundesdruckerei GmbH, 10969 Berlin (DE)
(72) Erfinder: VONRUETY, Mario, 10247 Berlin (DE); HERRMANN, Klaus, 30625 Hannover (DE)
(74) Vertreter: Patentship Patentanwaltsgesellschaft mbH
(86) Internationale Anmeldenummer: PCT/EP2016/064924
(87) Internationale Veröffentlichungsnummer: WO 2017/005529

(56) Entgegenhaltungen:
- WO-A2-2007/008949
- WO-A2-2007/117828
- WO-A2-2009/087599
- US-A1- 2012 329 389

## Beschreibung

Die Offenlegungsschrift US 2012/0329389 A1 beschreibt eine NFC-Vorrichtung.

Die Offenlegungsschrift WO 2009/087599 A2 beschreibt eine Vorrichtung zum Messen eines elektromagnetischen Feldes.

Die Offenlegungsschrift WO 2007/117828 A2 beschreibt einen Tag, der ein Substrat umfasst.

Die Offenlegungsschrift WO 2007/008949 A2 beschreibt eine Vorrichtung umfassend einen RFID-Tag.

Moderne Identifikationsdokumente, welche mit einem elektronischen Chip ausgestattet sind, werden üblicherweise drahtlos personalisiert. Hierzu werden personenbezogene Daten, wie Namen, Adressen oder Geburtsdaten zu dem Chip des Identifikationsdokumentes drahtlos übertragen und dort gespeichert. Die Verifikation der Dokumenten-Personalisierung kann ebenfalls drahtlos durchgeführt werden.

Die Personalisierung von Identifikationsdokumenten kann maschinell unter Verwendung von Geräten durchgeführt werden, welche beispielsweise in der Druckschrift WO 2014/117879 A1 beschrieben sind. Zum Zugriff auf den Chip unter Verwendung eines elektromagnetischen Feldes werden üblicherweise Lesegeräte wie RFID-Leser eingesetzt, deren Eigenschaften in der Normen ISO 14443 und ISO 10373-6 sowie in der technischen Richtlinie TR 3105 Part 4 definiert sind.

Wie es in der technischen Richtlinie TR 3105 Part 4 beschrieben ist, kann eine derartige RFID-Messkarte in der Gestalt eines Dokumentes realisiert werden. Eine derartige Messkarte kann insbesondere eingesetzt werden, um eine Feldstärke und/oder andere Parameter des elektromagnetischen Feldes, mit welchem beispielsweise ein Chip eines Identifikationsdokumentes beschrieben bzw. ausgelesen werden soll, zu erfassen. Hierzu wird eine Messkarte an einem Prüfort, beispielsweise innerhalb eines zur drahtlosen Personalisierung eingesetzten Gerätes, angeordnet, an welchem die Feldstärke oder der betreffende Parameter des elektromagnetischen Feldes erfasst werden soll. Die erfassten Messwerte können beispielsweise einer Auswerteeinheit zugeführt werden. Ein sich hierbei stellendes Problem ist die Erfassung der Mess-Parameter an einem schwer zugänglichen bzw. uneinsehbaren Ort innerhalb eines Gerätes.

Es ist daher die Aufgabe der vorliegenden Erfindung, eine Messkarte zur Erfassung eines elektromagnetischen Feldes an einem schwer zugänglichen oder uneinsehbaren Prüfort innerhalb eines zur Personalisierung und/oder Verifikation von Identifikationsdokumenten einsetzbaren Gerätes oder innerhalb einer Maschine zu schaffen.

Diese Aufgabe wird durch die Merkmale der unabhängigen Ansprüche gelöst. Vorteilhafte Weiterbildungsformen sind Gegenstand der abhängigen Ansprüche, der Beschreibung sowie der Zeichnungen.

Die vorliegende Erfindung basiert auf der Erkenntnis, dass die obige Aufgabe durch eine Messkarte mit einer drahtlosen Kommunikationsschnittstelle, welche mittels einer aus dem elektromagnetischen Feld gewonnenen elektrischen Energie betrieben wird, gelöst werden kann. Auf diese Weise ist es möglich, einen Messwert, beispielsweise eine Feldstärke, des elektromagnetischen Feldes drahtlos, insbesondere über eine kurze Sendestrecke, zu übertragen. Zur Reduktion des Energieverbrauchs kann die Sendestrecke beispielsweise 30 cm, 50 cm oder 1 m betragen. Darüber hinaus kann die Kommunikationsschnittstelle den erfassten Messwert zu einem Zeitpunkt aussenden, zu welchem beispielsweise keine Messung der Feldstärke des elektromagnetischen Feldes durchgeführt wird, sodass aus dem elektromagnetischen Feld elektrische Energie zur Aussendung des Messwertes gewonnen werden kann und die eigentliche Messung nicht beeinflusst wird..

Durch die Verwendung der drahtlosen Kommunikationsschnittstelle ergibt sich zudem die Möglichkeit der Vor-Ort-Steuerung bzw. Programmierung von Parametern der Messkarte. Dadurch kann beispielsweise die elektrische Last, welche in der Messkarte implementiert sein kann, gesteuert oder variiert werden, um Messwerte des elektromagnetischen Feldes bei unterschiedlichen elektrischen Belastungen zu erfassen.

Gemäß einem Aspekt betrifft die Erfindung eine Messkarte zur Erfassung eines Messwertes eines elektromagnetischen Feldes mit einem Messkartenkörper, einer mit dem Messkartenkörper integrierten Antennenanordnung zum Empfangen des elektromagnetischen Feldes, einem auf dem Messkartenkörper angeordneten Prozessor zum Bestimmen des Messwertes des empfangenen elektromagnetischen Feldes, wobei der Prozessor ausgebildet ist, ein Sendesignal mit dem Messwert gemäß einer drahtlosen Übertragungstechnologie zu erzeugen, einer auf dem Messkartenkörper angeordneten drahtlosen Kommunikationsschnittstelle zum Aussenden des Sendesignals über ein Kommunikationsnetzwerk gemäß der drahtlosen Übertragungstechnologie und einer Gleichrichterschaltung, welche der Empfangsantenne nachgeschaltet und ausgebildet ist, aus dem empfangenen elektromagnetischen Feld elektrische Energie zu gewinnen, und den Prozessor zum Bestimmen des Messwertes und zum Erzeugen des Sendesignals sowie die drahtlose Kommunikationsschnittstelle zum Aussenden des Sendesignals mit der gewonnenen elektrischen Energie zu versorgen.

Zur Erzeugung des Sendesignals mit dem Messwert gemäß der drahtlosen Übertragungstechnologie, beispielsweise Bluetooth, ist der Prozessor ausgebildet, den Messwert in ein Sendedatenformat zu überführen. Hierbei kann der Prozessor ausgebildet sein, den Messwert in einem Senderahmen oder einem Sendeburst gemäß der drahtlosen Übertragungstechnologie zu übertragen.

Der Messwert selbst kann beispielsweise in der Gestalt eines analogen oder eines digitalen Wertes vorliegen. Der Messwert kann beispielsweise die Feldstärke, die Energie oder die Leistung des elektromagnetischen Feldes sein. Die Bestimmung eines der vorgenannten Messwerte kann in an sich bekannter Weise durchgeführt werden.

Die integrierte Antennenanordnung kann beispielsweise Merkmale gemäß der technischen Norm TR 3105 Part 4 aufweisen.

Gemäß einer Ausführungsform ist der Messkartenkörper aus Kunststoff gefertigt. Der Messkartenkörper kann laminierte Kunststoffschichten umfassen. Der Messkartenkörper kann als eine Leiterplatte ausgeführt sein.

Die integrierte Antennenanordnung kann beispielsweise auf dem Messkartenkörper oder innerhalb des Messkartenkörpers, insbesondere in einer Kunststoffschicht des Messkartenkörpers integriert bzw. angeordnet sein.

Gemäß einer Ausführungsform ist der Messkartenkörper scheckkartenförmig oder in einem der folgenden Formate: ID1-, ID2- oder ID3, insbesondere gemäß der Norm ISO/IEC 7810, geformt.

Gemäß einer Ausführungsform ist die drahtlose Übertragungstechnologie eine der folgenden drahtlosen Übertragungstechnologien: Bluetooth, Niedrigenergie-Bluetooth (Low-Energie Bluetooth), ZigBee, Nahfeld-Übertragungstechnologie. Durch die Verwendung einer der vorgenannten Übertragungstechnologien wird der Energiebedarf der Kommunikationsschnittstelle reduziert. Weitere Ausführungen alternativer Übertragungstechnologien können auch indirekte optische, magnetische, akustische Übertragungskanäle verwenden.

Gemäß einer Ausführungsform sind der Prozessor und die drahtlose Kommunikationsschnittstelle in einem Kommunikationschip, insbesondere in einem Bluetooth-Chip, integriert.

Dadurch wird eine besonders einfache und kostengünstige Realisierung der Messkarte erreicht. So können beispielsweise der Prozessor sowie die drahtlose Kommunikationsschnittstelle in dem separaten Chip, beispielsweise einem Bluetooth-Chips, integriert sein. Der Chip kann an dem Messkartenkörper der Messkarte beispielsweise unter Verwendung von SMD-Kontaktierungen befestigt werden. Hierbei kann ferner ein Ausgang des Gleichrichters mit einem Energieeingang des Chips verbunden sein, um den Chip mit elektrischer Energie zu versorgen, welche aus dem elektromagnetischen Feld abgeleitet wird. Gemäß einer Ausführungsform kann der Gleichrichter ebenfalls in dem Chip integriert sein, so dass hierbei einer oder mehrere Ausgänge der Antennenanordnung mit dem Chip verbunden werden können.

Gemäß einer Ausführungsform umfasst die Antennenanordnung eine in der Messkarte eingebettete oder auf einer Oberfläche des Messkartenkörpers angeordnete Antennenspule zum Empfangen des elektromagnetischen Feldes, wobei die Antennenspule mit dem Gleichrichter für die Energiegewinnung und mit dem Prozessor für die Messwerterfassung gekoppelt ist. Mit anderen Worten ausgedrückt wird gemäß dieser Ausführungsform eine einzige Antenne sowohl für die Energiegewinnung als auch für die Messwerterfassung verwendet.

Gemäß einer Ausführungsform umfasst die Antennenanordnung eine in dem Messkartenkörper eingebettete oder auf einer Oberfläche des Messkartenkörpers angeordnete erste Antennenspule und eine in dem Messkartenkörper eingebettete oder auf einer Oberfläche des Messkartenkörpers angeordnete zweite Antennenspule, wobei die erste Antennenspule mit dem Gleichrichter für die Energiegewinnung gekoppelt ist und wobei die zweite Antennenspule mit dem Prozessor für die Messwerterfassung gekoppelt ist. Die erste und die zweite Antennenspule können, wie es in der technischen Richtlinie TR 3105 Part 4 definiert ist, ausgeführt und verwendet sein.

Gemäß einer Ausführungsform weist die Gleichrichterschaltung einen Energiespeicher zum Speichern der gewonnenen Energie auf, und der Energiespeicher ist vorgesehen, den Prozessor zum Bestimmen des Messwertes und zum Erzeugen des Sendesignals und/oder die drahtlose Kommunikationsschnittstelle zum Aussenden des Sendesignals mit der in dem Energiespeicher gespeicherten elektrischen Energie zu versorgen. Der Energiespeicher kann beispielsweise durch eine Folienbatterie oder durch einen sogenannten Superkondensator geformt sein. Durch die Verwendung des Energiespeichers wird aus dem elektromagnetischen Feld abgeleitete elektrische Energie zwischengespeichert, welche für den Betrieb des Prozessors und/oder der Kommunikationsschnittstelle verwendet werden kann.

Gemäß einer Ausführungsform ist der Prozessor ausgebildet, in einem ersten Zeitintervall gespeist mit in dem Energiespeicher gespeicherter Energie den Messwert zu bestimmen und das Sendesignal zu erzeugen, wobei die Gleichrichterschaltung ausgebildet ist, den Energiespeicher in einem dem ersten Zeitintervall folgenden zweiten Zeitintervall mit aus dem empfangenen elektromagnetischen Feld gewonnener elektrischer Energie zu laden, und wobei die drahtlose Kommunikationsschnittstelle in einem dem zweiten Zeitintervall folgenden dritten Zeitintervall ausgebildet ist, gespeist mit in dem Energiespeicher gespeicherter Energie das Sendesignal auszusenden. Durch die intermediäre Energiespeicherung kann jeweils genug Energie für den nächsten Arbeitsgang der Messkarte, beispielsweise für die Messwerterfassung oder für die Auswertung oder Aussendung des Messwertes, gewonnen werden.

Gemäß einer Ausführungsform sind die Antennenspule bzw. die erste oder die zweite Antennenspule abgestimmte oder abstimmbare RFID-Empfängerspulen.

Gemäß einer Ausführungsform umfasst die Gleichrichterschaltung eine Graetz-Gleichrichtung, einen Spannungsregler, einen oder mehrere ADCs mit beispielsweise einer ganzseitigen Messwertkonditionierung. Diese Funktionselemente können beispielsweise in der Gestalt einer Niedrigleistungs-Elektronikschaltung realisiert werden. Der Gleichrichter kann gemäß einer Ausführungsform Merkmale des in der technischen Richtlinie TR 3105 Teil IV beschriebenen Gleichrichters aufweisen.

Gemäß einer Ausführungsform weist die Messkarte eine steuerbare elektrische Last zur Belastung des elektromagnetischen Feldes auf, und der Prozessor ist ausgebildet, einen Wert der steuerbaren elektrischen Last einzustellen. Hier wird in vorteilhafter Weise die Möglichkeit einer variablen Feldbelastung für Test- und Prüfzwecke realisiert.

Gemäß einer Ausführungsform ist die drahtlose Kommunikationsschnittstelle ausgebildet, einen Lastparameter über das Kommunikationsnetzwerk zu empfangen, und der Prozessor ist ausgebildet, den Wert der steuerbaren elektrischen Last gemäß dem empfangenen Lastparameter einzustellen. Die Einstellung bzw. Auswahl des Lastparameters der steuerbaren elektrischen Last kann beispielsweise an einem entfernten PC oder an einer entfernten Steuereinheit, welche eine Kommunikationsschnittstelle aufweist, welche mit der Kommunikationsschnittstelle der Messkarte kommunizieren kann, eingestellt werden.

Gemäß einer Ausführungsform weist die steuerbare elektrische Last eine schaltbare erste Lastimpedanz und eine schaltbare zweite Lastimpedanz auf, und der Prozessor ist ausgebildet, die erste Lastimpedanz oder die zweite Lastimpedanz zu schalten. Die schaltbaren Lastimpedanzen können beispielsweise Ohmsche Widerstände sein, welche mittels Schalttransistoren geschaltet werden können. Die Schaltung der Schalttransistoren kann mittels des Prozessors gesteuert werden.

Über eine Modulation der Last kann ggf. auch eine Kommunikation mit dem RFID-Lesegerät bzw. mit der Reader-Einheit erfolgen.

Gemäß einer Ausführungsform weist die Messkarte zusätzlich ferner eine optische Anzeige zum Anzeigen des elektrischen Messwertes oder der jeweiligen Messkartenstati auf. Die optische Anzeige kann beispielsweise eine Anzahl von lichtemittierenden Dioden umfassen und einen balkenförmigen Indikator des elektrischen Messwertes, beispielsweise der Feldstärke, anzeigen. Dadurch kann der Messwert und/oder Messkartenstatus visuell erfasst werden.

Gemäß einer Ausführungsform ist der elektrische Messwert eine Feldstärke des empfangenen elektromagnetischen Feldes.

Gemäß einer Ausführungsform umfasst die drahtlose Kommunikationsschnittstelle eine Kommunikationsantenne zum drahtlosen Kommunizieren über das Kommunikationsnetzwerk, oder die Kommunikationsschnittstelle ist ausgebildet, die Antennenanordnung für die drahtlose Kommunikation über das Kommunikationsnetzwerk zu verwenden. Die Kommunikationsantenne kann beispielsweise eine integrierte Kommunikationsantenne sein, welche zumindest eine andere Spule aufweist. Bei der Verwendung der Antennenanordnung für die drahtlose Kommunikation über das Kommunikationsnetzwerk kann beispielsweise eine der vorgenannten Antennenspulen verwendet werden.

Die drahtlose Kommunikation kann beispielsweise das Aussenden des Messwertes über das Kommunikationsnetzwerk und/oder das Empfangen des vorgenannten Lastparameters umfassen.

Gemäß einer Ausführungsform ist die Kommunikationsschnittstelle ausgebildet, einen Steuerbefehl für den Prozessor über das Kommunikationsnetzwerk zu empfangen, wobei der Prozessor ausgebildet ist, einen Messparameter gemäß dem empfangenen Steuerbefehl einzustellen. Der Messparameter kann beispielsweise eine Messdauer oder eine Messfrequenz umfassen.

Gemäß einer Ausführungsform umfasst die Messkarte ferner eine Abstimmschaltung zum Abstimmen einer Empfangsfrequenz der Antennenanordnung. Die Abstimmschaltung kann beispielsweise, wie es in der technischen Richtlinie TR 3105 Part 4 ausgeführt ist, gebildet sein und/oder Abstimmkapazitäten aufweisen.

Weitere Ausführungsbeispiele der vorliegenden Erfindung werden Bezug nehmend auf die beiliegenden Zeichnungen näher erläutert. Es zeigen:
- Fig. 1: ein Blockdiagramm einer Messkarte; und
- Fig. 2: ein Blockdiagramm einer Messkarte.

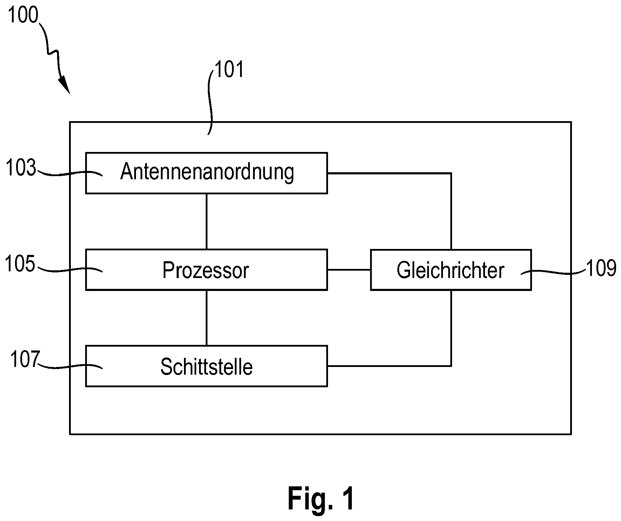

Fig. 1 zeigt ein Blockdiagramm einer Messkarte 100 gemäß einer Ausführungsform.

Die Messkarte 100 umfasst einen Messkartenkörper 101, welcher beispielsweise scheckkartenförmig ist. Der Messkartenkörper kann aus Kunststoff gefertigt sein und in der Gestalt einer Leiterplatte vorliegen.

Die Messkarte 100 umfasst ferner eine Antennenanordnung 103, welche eine oder mehrere Antennenspulen aufweisen kann. Die Antennenanordnung 103 kann auf einer Oberfläche des Messkartenkörpers 101 oder in einer Zwischenschicht des Messkartenkörpers 101 angeordnet sein. Eine Antennenspule oder die mehreren Antennenspulen können beispielsweise planare Windungen aufweisen, welche durch das zu erfassende elektromagnetische Feld durchsetzbar sind.

Die Messkarte 100 umfasst ferner einen Prozessor 105, welcher auf dem Messkartenkörper 101 angeordnet ist. Der Prozessor 105 kann beispielsweise mittels der SMD-Technologie auf dem Messkartenkörper 101 befestigt sein. Der Prozessor 105 ist vorgesehen, einen Messwert, beispielsweise eine Feldstärke, des durch die Antennenanordnung 103 empfangenen elektromagnetischen Feldes zu bestimmen. Der Prozessor 105 ist ferner ausgebildet, ein Sendesignal mit dem Messwert gemäß einer drahtlosen Übertragungstechnologie, wie beispielsweise Niedrigenergie-Bluetooth, zu erzeugen.

Auf dem Messdatenkörper 101 ist ferner eine drahtlose Kommunikationsschnittstelle 107 angeordnet, welche vorgesehen ist, das durch den Prozessor 105 erzeugte Sendesignal über ein drahtloses Kommunikationsnetzwerk, beispielsweise über ein Bluetooth-Kommunikationsnetzwerk, auszusenden.

Zum Versorgen des Prozessors 105 sowie der Kommunikationsschnittstelle 107 mit elektrischer Energie ist eine Gleichrichterschaltung 109 vorgesehen, welche der Antennenanordnung 103 nachgeschaltet ist. Die Gleichrichterschaltung 109 ist vorgesehen, elektrische Energie aus dem elektromagnetischen Feld, insbesondere aus dem elektromagnetischen Messfeld, zu gewinnen und den Prozessor 105 sowie die Kommunikationsschnittstelle 107 mit der gewonnenen elektrischen Energie zu versorgen. Die Gleichrichterschaltung 109 kann beispielsweise die Merkmale der in der technischen Richtlinie TR 3105 Part 4 offenbarten Gleichrichterschaltung aufweisen.

Gemäß einer Ausführungsform sind der Prozessor 105 und die Kommunikationsschnittstelle 107 getrennte Bauelemente, welche auf einer Oberfläche des Messkartenkörpers 101 angeordnet sind. Gemäß einer anderen Ausführungsform sind der Prozessor 105 sowie die Kommunikationsschnittstelle 107 in einem gemeinsamen Chip integriert, welcher beispielsweise ein Bluetooth-Chip sein kann, welcher ebenfalls auf dem Messdatenkörper 101 angeordnet werden kann.

Gemäß einer Ausführungsform umfasst die Kommunikationsschnittstelle 107 eine eigene Kommunikationsantenne. Gemäß einer anderen Ausführungsform nutzt die Kommunikationsschnittstelle 107 die Antennenanordnung 103 bzw. eine der Antennenspulen der Antennenanordnung 103, um über ein Kommunikationsnetzwerk mit einer entfernten Netzwerkentität, beispielsweise einem Computer, zu kommunizieren.

Gemäß einer Ausführungsform umfasst die Kommunikationsschnittstelle 107 einen Sender/Empfänger, um über das Kommunikationsnetzwerk zu kommunizieren.

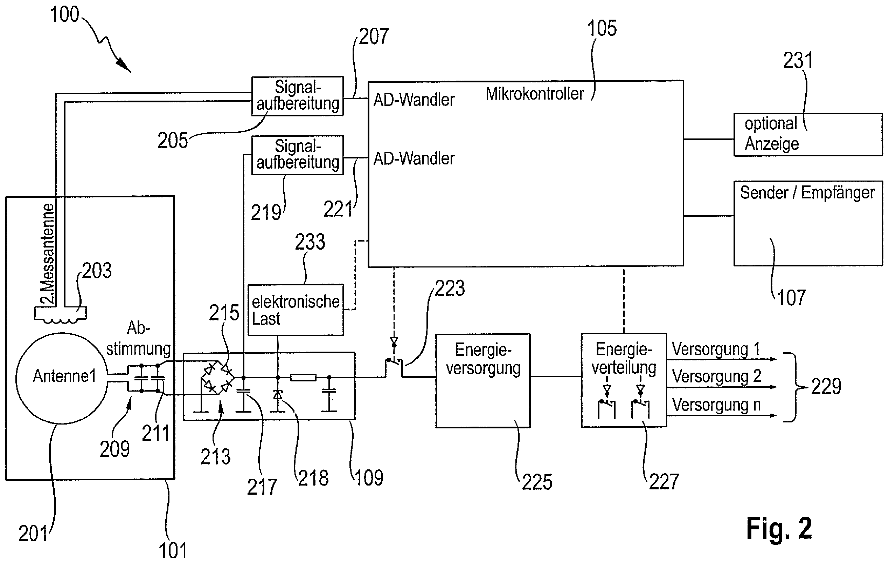

Fig. 2 zeigt einen beispielhaften Aufbau der Messkarte 100 gemäß einer Ausführungsform.

Die Antennenanordnung 101 umfasst eine erste Antennenspule 201, welche mit der Gleichrichterschaltung 109 gekoppelt ist, und eine zweite Antennenspule 203, welche über eine optionale Signalaufbereitung 205 mit einem Eingang 207 des Prozessors 105 gekoppelt ist. Dem Eingang 207 kann ein Analog-Digitalwandler nachgeschaltet sein, um ein analoges Antennensignal in ein digitales Signal zu überführen. Die Signalaufbereitung 205 kann beispielsweise eine Filterung, insbesondere eine Bandpassfilterung oder eine Tiefpassfilterung, eine Verstärkung oder eine Dämpfung sowie gegebenenfalls eine Abwärtsmischung des Antennensignals auf eine Basisbandfrequenz aufweisen.

Ein Ausgang der ersten Antennenspule 201 ist über eine optionale Abstimmschaltung 209 mit dem Gleichrichter 109 gekoppelt. Die optionale Abstimmschaltung 209 kann beispielsweise die in Fig. 2 gezeigten Abstimmkapazitäten 211 aufweisen, welche beispielsweise parallel geschaltet sind und variabel sein können. Die Abstimmschaltung 209 ist vorgesehen, die Empfangsfrequenz bzw. Resonanzfrequenz der ersten Antennenspule abzustimmen.

Die Gleichrichterschaltung 109 kann einen Gleichrichter 213, beispielsweise einen Graetz-Gleichrichter mit den in Fig. 2 dargestellten Dioden 215 sowie eine dem Gleichrichter 213 nachgeschaltete und gegen Masse geschaltete Glättungskapazität 217 aufweisen. Ein Ausgang des Gleichrichters 213 ist über eine weitere optionale Signalaufbereitung 219 mit einem weiteren Eingang 221 des Prozessors 105 verbunden. Dem weiteren Eingang 221 kann ein Analog-Digitalwandler nachgeschaltet sein. Die weitere Signalaufbereitung 219 kann beispielsweise eine Bandpassfilterung, eine Verstärkung oder eine Dämpfung des Ausgangssignals des Gleichrichters 213 umfassen.

Der Ausgang des Gleichrichters 213 ist ferner mit einer Filter-Schaltung umfassend einen Widerstand sowie eine dem Widerstand nachgeschaltete und gegen Masse geschaltete Kapazität verbunden.

Der Ausgang des Gleichrichters 213 ist optional über eine in Sperrrichtung betriebene Diode 218, beispielsweise einer Zener-Diode, mit Masse verbunden.

Die Gleichrichterschaltung 109 ist ausgangsseitig über einen optionalen Schalter 223 mit einem Energiespeicher 225 verbunden. Der Energiespeicher 225 kann beispielsweise eine Kapazität zur Energiespeicherung, beispielsweise einen Pufferspeicher, wie einen Superkondensator, oder eine Folienbatterie umfassen. Der Energiespeicher 225 kann ferner einen Spannungsregler bzw. einen LDO (Low Drop-Out) umfassen. Der Energiespeicher 225 kann ferner eine Ladeelektronik umfassen.

Dem Energiespeicher 225 ist eine optionale Energieverteilungsanordnung 227 nachgeschaltet, welche durch den Prozessor 105 steuerbar sein kann, wie es in Fig. 2 angedeutet ist. Die Energieverteilungsanordnung 227 kann mehrere schaltbare Energieversorgungsanschlüsse 229 aufweisen. Die Energieversorgungsanschlüsse 229 können beispielsweise mit Energieanschlüssen von Funktionskomponente der Messkarte 100 verbunden sein, um diese mit elektrischer Energie zu versorgen.

Eine derartige Funktionskomponente ist die optionale Anzeige 231, welche eine Anzahl von LED-Dioden aufweisen kann, um einen Messwert, beispielsweise eine Feldstärke, anzuzeigen. Dabei kann eine Anzahl von aktivierten Dioden oder eine bestimmte einzelne Diode einen Feldstärkebereich oder alternative Funktionsparameter der Messkarte wie z.B. Energiestatus, Senden, Empfangen u.s.w. anzeigen.

Darüber hinaus kann einer der Versorgungsanschlüsse 229 mit einem Energieversorgungsanschluss der Kommunikationsschnittstelle 107 verbunden sein, um die Kommunikationsschnittstelle 107 mit elektrischer Energie zu versorgen.

Darüber hinaus kann einer der Versorgungsanschlüsse 229 mit einem Energieanschluss des Prozessors 107 verbunden sein, um diesen mit elektrischer Energie zu versorgen.

Die Versorgung des Prozessors 105 mit elektrischer Energie kann jedoch auch über den Anschluss 221 erfolgen, welcher dem Ausgang des Gleichrichters 213 nachgeschaltet ist.

Der Schalter 223, welcher beispielsweise als ein Schalttransistor ausgeführt ist, kann, wie es in Fig. 2 dargestellt ist, durch den Prozessor 105 gesteuert werden. In einem ersten Zeitintervall kann der Schalter 223 beispielsweise geöffnet werden. In dem ersten Zeitintervall wird der Energiespeicher 225 somit von dem Gleichrichter 213 entkoppelt und nicht geladen, sondern belastet und dadurch entladen. In dem ersten Zeitintervall, gespeist durch die in dem Energiespeicher 225 gespeicherte elektrische Energie, kann der Prozessor 105 den Messwert in an sich bekannter Weise bestimmen. Hierzu kann das Ausgangssignal der ersten Antennenspule 201 oder der zweiten Antennenspule 203 verwendet werden.

In dem ersten Zeitintervall wird der Prozessor 105 durch den Energiespeicher 225 mit elektrischer Energie versorgt, welche in einem vorhergehenden Zeitintervall gespeichert worden ist. Hierbei wird beispielsweise ein Kondensator des Energiespeichers 225 entladen. In einem darauffolgenden Zeitintervall kann der Schalter 223 geschlossen werden, wodurch der Energiespeicher 225 mit dem Ausgang des Gleichrichters 213 verbunden wird. Die elektrische Energie wird durch den Gleichrichter 213 bereitgestellt und aus dem Antennensignal der ersten Antennenspule 201 und somit aus dem elektromagnetischen Messfeld gewonnen. Nach einer Aufladung des Energiespeichers 225 bzw. nach einer Aufladung einer Kapazität des Energiespeichers 225 kann der Schalter 223 wieder geöffnet werden, sodass die gespeicherte elektrische Energie für eine der Funktionskomponenten der Messkarte 100 bereitgestellt wird.

In dem darauffolgenden Zeitintervall kann der Prozessor 105 einen weiteren Messwert erfassen. Alternativ kann in dem darauffolgenden Zeitintervall die Kommunikationsschnittstelle 107 den durch den Prozessor 105 erfassten Messwert aussenden. Dieser Messwert kann beispielsweise unter Verwendung eines einzigen Senderahmens bzw. eines einzigen Sendebursts ausgesendet werden, um weiter Energie zu sparen. In einem darauffolgenden Zeitintervall wird der Schalter 223 erneut geschlossen, so dass der Energiespeicher 225 erneut mit elektrischer Energie geladen wird. Auf diese Weise können sämtliche Funktionskomponenten der Messkarte sukzessive mit elektrischer Energie versorgt werden bzw. die Verarbeitungsschritte können schrittweise durchgeführt werden, ohne dass eine eigenständige Energieversorgung notwendig ist.

Der Prozessor 105, welcher als ein Mikrocontroller ausgeführt sein kann, übernimmt gemäß einer Ausführungsform die Steuerung der Funktionskomponenten, wie sie beispielsweise in Fig. 2 dargestellt sind, der Messkarte 100 bzw. der Energiespeicherung und Energieverteilung. So kann der Prozessor 105 die Energieverteilungsanordnung 227 ansteuern, um die Funktionskomponenten, wie die optische Anzeige 231 bzw. die Kommunikationsschnittstelle 107 oder eine der Signalverarbeitungen 205, 217 mit elektrischer Energie zu versorgen.

Gemäß einer Ausführungsform können die Parameter der Messkarte 100, wie eine elektrische Last, variiert bzw. gesteuert werden. Hierzu kann die Messkarte 100 eine steuerbare elektronische Last 233 aufweisen, welche durch den Prozessor 105 steuerbar ist. Die elektronische Last kann beispielsweise einen mehrere Impedanzwerte aufweisen, welche durch den Prozessor 105 anwählbar sind, um unterschiedliche Lasten der Messkarte 100 einzustellen. Hierzu kann der Ausgang 213 des Gleichrichters mit dem Eingang der elektronischen Last 233 verbunden sein, wie es in Fig. 2 angedeutet ist. Durch die elektronische Last 233 wird eine Belastung der Antennenanordnung 101, insbesondere die Last an der ersten Antennenspule 201, eingestellt.

Gemäß einer Ausführungsform kann ein Steuerbefehl zur Einstellung der elektronischen Last 233 über die Kommunikationsschnittstelle 107 empfangen und dem Prozessor 105 zugeführt werden. Ansprechend auf den Empfang des Steuerbefehls kann der Prozessor 105 ausgebildet sein, die elektronische Last 233 bzw. einen Impedanzwert der elektronischen Last 233 gemäß dem Steuerbefehl bzw. gemäß einem durch den Steuerbefehl angezeigten Impedanzwert einzustellen. Hierzu kann beispielsweise ein Schalttransistor, welcher einer Impedanz mit dem Impedanzwert zugeordnet ist, angeschaltet werden.

Die Messkarte 100 kann gemäß einer Ausführungsform im Rahmen der Überprüfung von Geräten bzw. Maschinen eingesetzt werden, welche zur Dokumenten-Personalisierung und -verifikation eingesetzt werden. Insbesondere können mittels der Messkarte 100 die Eigenschaften des elektromagnetischen Feldes überprüft werden.

Durch die Verwendung der drahtlosen Kommunikationsschnittstelle 107 ist eine drahtlose Kurzstreckenübertragung der erfassten Messwertes sowie von Ergebnissen weiterer Prüfungen, wie beispielsweise einer Feldbelastungsprüfung, welche mittels der Messkarte 100 durchgeführt werden können, möglich. Auf diese Weise können die Messwerte aus unzugänglichen bzw. schwer zugänglichen bewegten oder verdeckten Positionen zu einem abgesetzten Empfänger übertragen werden. Ein derartiger Empfänger kann beispielsweise mittels eines Laptops oder eines Smartphones oder eines Loggers implementiert werden. Die erfassten Messwerte können ferner auf einem Anzeigemedium des Empfängers dargestellt werden.

Darüber hinaus ist durch die Verwendung der Kommunikationsschnittstelle 107 eine drahtlose Steuerung des Prozessors 105 und mithin der Mess- oder Prüffunktionalität der Messkarte 100 auch dann möglich, wenn diese in einer unzugänglichen Position oder an einem unzugänglichen Prüfort in einem Gerät der vorgenannten Art angeordnet ist. Somit sind Prüfungen bzw. Messungen an schwer zugänglichen oder verschlossenen und/oder optisch nicht sichtbaren Prüforten innerhalb von Geräten oder Maschinen möglich. Darüber hinaus können Prüfungen und Messungen an Prüforten durchgeführt werden, welche kein größeres Bauvolumen der Messkarte 100 zulassen.

Darüber hinaus kann die Messkarte 100 in mehreren Geräten oder Maschinen an stets der gleichen Position angeordnet werden. Dadurch kann der Prozessablauf, insbesondere die Zuführung und die Entnahme der Messkarte 100, vereinfacht werden. Durch die Verwendung von mehreren Messkarten 100 können gegenseitige Einflüsse eng benachbarter Prüflinge erfasst werden.

Gemäß einer Ausführungsform kann die Messkarte 100 in einem RFID-Messgerät eingesetzt werden, um das elektromagnetische Feld zu überwachen, das mittels des RFID-Messgerätes ausgelesen werden soll.

Gemäß einer weiteren Ausführungsform kann die Messkarte 100 im Rahmen eines Fertigungsprozesses, bei welchem die Identifikationsdokumente unter Verwendung eines elektromagnetischen Feldes personifiziert werden, eingesetzt werden. Hierbei kann mittels der Messkarte 100 beispielsweise die Feldstärke des elektromagnetischen Feldes überwacht werden, so dass bei einer Unterschreitung eines Grenzwertes die Feldstärke sendeseitig erhöht werden kann und bei Überschreitung eines Grenzwertes die Feldstärke sendeseitig verringert werden kann. Auf diese Weise wird ein verringerter Produktausschuss bei der Personenidentifizierung von Identifikationsdokumenten erreicht.

Gemäß einem weiteren Aspekt betrifft die Erfindung somit generell ein RFID-Lesegerät mit der Messkarte 100 zur Erfassung eines Messwertes des elektromagnetischen Feldes, welches durch das RFID-Lesegerät erfasst werden soll.

### Bezugszeichenliste

- 100: Messkarte
- 101: Messkartenkörper
- 103: Antennenanordnung
- 105: Prozessor
- 107: Kommunikationsschnittstelle
- 109: Gleichrichterschaltung

- 201: erste Antennenspule
- 203: zweite Antennenspule
- 205: Signalaufbereitung
- 207: Eingang
- 209: Abstimmschaltung
- 211: Abstimmkapazität
- 213: Gleichrichter
- 215: Diode
- 217: Glättungskapazität
- 218: Diode
- 219: Signalaufbereitung
- 221: Eingang
- 223: Schalter
- 225: Energiespeicher
- 227: Energieverteilungsanordnung
- 229: Energieversorgungsanschluss
- 231: Anzeige
- 233: elektronische Last, elektrische Last

## Patentansprüche

1. Messkarte (100) zur Erfassung eines Messwertes eines elektromagnetischen Feldes, mit:
einem Messkartenkörper (101);
einer mit dem Messkartenkörper (101) integrierten Antennenanordnung (103) zum Empfangen des elektromagnetischen Feldes;
einem auf dem Messkartenkörper (101) angeordneten Prozessor (105) zum Bestimmen eines Messwertes des empfangenen elektromagnetischen Feldes, wobei der Prozessor (105) ausgebildet ist, ein Sendesignal mit dem Messwert gemäß einer drahtlosen Übertragungstechnologie zu erzeugen;
einer auf dem Messkartenkörper (101) angeordneten drahtlosen Kommunikationsschnittstelle (107) zum Aussenden des Sendesignals über ein Kommunikationsnetzwerk gemäß der drahtlosen Übertragungstechnologie; und
einer Gleichrichterschaltung (109), welche der Empfangsantenne nachgeschaltet und ausgebildet ist, aus dem empfangenen elektromagnetischen Feld elektrische Energie zu gewinnen, und den Prozessor (105) zum Bestimmen des Messwertes und zum Erzeugen des Sendesignals sowie die drahtlose Kommunikationsschnittstelle (107) zum Aussenden des Sendesignals mit der gewonnenen elektrischen Energie zu versorgen, **dadurch gekennzeichnet, dass** die Messkarte (100) ferner eine steuerbare elektrische Last (233) aufweist, wobei der Prozessor (105) ausgebildet ist, einen Lastwert der steuerbaren elektrischen Last (233) einzustellen, wobei die drahtlose Kommunikationsschnittstelle (107) ausgebildet ist, einen Lastparameter über das Kommunikationsnetzwerk zu empfangen, und wobei der Prozessor (105) ausgebildet ist, den Wert der steuerbaren elektrischen Last (233) gemäß dem empfangenen Lastparameter einzustellen.

2. Messkarte (100) nach Anspruch 1, wobei der Messkartenkörper (101) scheckkartenförmig oder in einem der folgenden Formate ist: ID1-, ID2- oder ID3-Format geformt ist.

3. Messkarte (100) nach Anspruch 1 oder 2, wobei die drahtlose Übertragungstechnologie eine der folgenden drahtlosen Übertragungstechnologien ist:
Bluetooth, Niedrigenergie-Bluetooth, ZigBee, Nahfeld-Übertragungstechnologie.

4. Messkarte (100) nach einem der vorstehenden Ansprüche, wobei der Prozessor und die drahtlose Kommunikationsschnittstelle (107) in einem Kommunikationschip, insbesondere in einem Bluetooth-Chip, integriert sind.

5. Messkarte (100) nach einem der vorstehenden Ansprüche, wobei die Antennenanordnung (103) eine in dem Messkartenkörper (101) eingebettete oder auf einer Oberfläche des Messkartenkörpers (100) angeordnete Antennenspule (201, 203) zum Empfangen des elektromagnetischen Feldes umfasst, wobei die Antennenspule (201, 203) mit dem Gleichrichter (213) für die Energiegewinnung und mit dem Prozessor (105) für die Messwerterfassung gekoppelt ist.

6. Messkarte (100) nach einem der vorstehenden Ansprüche 1 bis 4, wobei die Antennenanordnung (103) eine in dem Messkartenkörper (101) eingebettete oder auf einer Oberfläche des Messkartenkörpers (101) angeordnete erste Antennenspule (201) und eine in dem Messkartenkörper (101) eingebettete oder auf einer Oberfläche des Messkartenkörpers (101) angeordnete zweite Antennenspule (203) umfasst, wobei die erste Antennenspule (201) mit dem Gleichrichter (213) für die Energiegewinnung gekoppelt ist, und wobei die zweite Antennenspule (203) mit dem Prozessor (105) für die Messwerterfassung gekoppelt ist.

7. Messkarte (100) nach einem der vorstehenden Ansprüche, wobei die Gleichrichterschaltung (109) einen Energiespeicher (225) zum Speichern der gewonnenen Energie aufweist, und wobei der Energiespeicher (225) vorgesehen ist, den Prozessor (105) zum Bestimmen des Messwertes und zum Erzeugen des Sendesignals und/oder die drahtlose Kommunikationsschnittstelle (107) zum Aussenden des Sendesignals mit der in dem Energiespeicher (225) gespeicherten elektrischen Energie zu versorgen.

8. Messkarte (100) nach Anspruch 7, wobei der Prozessor (105) ausgebildet ist, in einem ersten Zeitintervall gespeist mit in dem Energiespeicher (225) gespeicherter Energie den Messwert zu bestimmen und das Sendesignal zu erzeugen, wobei die Gleichrichterschaltung (109) ausgebildet ist, den Energiespeicher (225) in einem dem ersten Zeitintervall folgenden zweiten Zeitintervall mit aus dem empfangenen elektromagnetischen Feld gewonnener elektrischer Energie zu laden, und wobei die drahtlose Kommunikationsschnittstelle (107) in einem dem zweiten Zeitintervall folgenden dritten Zeitintervall ausgebildet ist, gespeist mit in dem Energiespeicher (225) gespeicherter Energie das Sendesignal auszusenden.

9. Messkarte (100) nach einem der vorstehenden Ansprüche, wobei der Lastwert eine Impedanz ist.

10. Messkarte (100) nach einem der vorstehenden Ansprüche, wobei die steuerbare elektrische Last (233) eine schaltbare erste Lastimpedanz und eine schaltbare zweite Lastimpedanz aufweist, und wobei der Prozessor (105) ausgebildet ist, die erste Lastimpedanz oder die zweite Lastimpedanz zu schalten.

11. Messkarte (100) nach einem der vorstehenden Ansprüche, welche zusätzlich ferner eine optische Anzeige (231) zum Anzeigen des elektrischen Messwerts und/oder eines Messkarten-Zuständes aufweist.

12. Messkarte (100) nach einem der vorstehenden Ansprüche, wobei der elektrische Messwert eine Feldstärke des empfangenen elektromagnetischen Feldes ist.

13. Messkarte (100) nach einem der vorstehenden Ansprüche, wobei die drahtlose Kommunikationsschnittstelle (107) eine Kommunikationsantenne zum drahtlosen Kommunizieren über das Kommunikationsnetzwerk umfasst, oder wobei die Kommunikationsschnittstelle (107) ausgebildet ist, die Antennenanordnung (103) für die drahtlose Kommunikation über das Kommunikationsnetzwerk zu verwenden.

14. Messkarte (100) nach einem der vorstehenden Ansprüche, welche ferner eine Abstimmschaltung (209) zum Abstimmen einer Empfangsfrequenz der Antennenanordnung (103) umfasst.

## Claims

1. Measurement card (100) for capturing a measured value of an electromagnetic field, comprising:
a measuring card body (101);
an antenna arrangement (103) integrated with the measuring card body (101) for receiving the electromagnetic field;
a processor (105) disposed on the measuring card body (101) for determining a measured value of the received electromagnetic field, wherein the processor (105) is configured to generate a transmission signal having the measured value according to a wireless transmission technology;
a wireless communication interface (107) disposed on the measuring card body (101) for transmitting the transmission signal via a communication network according to said wireless transmission technology; and
a rectifier circuit (109) which is connected downstream of the receiving antenna and is configured to obtain electrical energy from the received electromagnetic field, and to supply the obtained electrical energy to the processor (105) for determining the measured value and for generating the transmission signal, and to the wireless communication interface (107) for transmitting the transmission signal, **characterized in that** the measurement card (100) further comprises a controllable electrical load (233), wherein the processor (105) is configured to adjust a load value of the controllable electrical load (233), wherein the wireless communication interface (107) is configured to receive a load parameter via the communication network, and wherein the processor (105) is configured to adjust the value of the controllable electrical load (233) according to the received load parameter.

2. Measurement card (100) according to claim 1, wherein the measurement card body (101) is credit card shaped or in one of the following formats: ID1, ID2 or ID3 format.

3. Measurement card (100) according to claim 1 or 2, wherein the wireless transmission technology is one of the following wireless transmission technologies: Bluetooth, low-energy Bluetooth, ZigBee, near-field transmission technology.

4. Measurement card (100) according to one of the preceding claims, wherein the processor and the wireless communication interface (107) are integrated in a communication chip, in particular in a Bluetooth chip.

5. Measurement card (100) according to one of the preceding claims, wherein the antenna arrangement (103) comprises an antenna coil (201, 203) for receiving the electromagnetic field embedded in the measuring card body (101) or arranged on a surface of the measuring card body (100), wherein the antenna coil (201, 203) is coupled to the rectifier (213) for power generation and to the processor (105) for measured value acquisition.

6. Measurement card (100) according to one of the preceding claims 1 to 4, wherein the antenna arrangement (103) comprises a first antenna coil (201) embedded in the measurement card body (101) or arranged on a surface of the measurement card body (101) and a second antenna coil (203) embedded in the measurement card body (101) or arranged on a surface of the measurement card body (101), wherein the first antenna coil (201) is coupled to the rectifier (213) for power generation, and wherein the second antenna coil (203) is coupled to the processor (105) for measured value acquisition.

7. Measurement card (100) according to one of the preceding claims, wherein the rectifier circuit (109) comprises an energy storage (225) for storing the obtained energy, and wherein the energy storage (225) is provided to supply the processor (105) with the electrical energy stored in the energy storage (225) for determining the measured value and for generating the transmission signal and/or to the wireless communication interface (107) for transmitting the transmission signal.

8. Measurement card (100) according to claim 7, wherein the processor (105) is configured to determine the measured value and to generate the transmission signal in a first time interval supplied with energy stored in the energy storage (225), wherein the rectifier circuit (109) is configured to charge the energy storage (225) with electrical energy obtained from the received electromagnetic field in a second time interval following the first time interval, and wherein in a third time interval following the second time interval the wireless communication interface (107) supplied with energy stored in the energy storage (225) is configured to transmit the transmission signal.

9. Measurement card (100) according to one of the preceding claims, wherein the load value is an impedance.

10. Measurement card (100) according to one of the preceding claims, wherein the controllable electrical load (233) comprises a switchable first load impedance and a switchable second load impedance, and wherein the processor (105) is configured to switch the first load impedance or the second load impedance.

11. Measurement card (100) according to one of the preceding claims, which additionally further comprises an optical display (231) for displaying the electrical measured value and/or a measurement card status.

12. Measurement card (100) according to one of the preceding claims, wherein the electrical measured value is a field strength of the received electromagnetic field.

13. Measurement card (100) according to one of the preceding claims, wherein the wireless communication interface (107) comprises a communication antenna for wireless communication over the communication network, or wherein the communication interface (107) is configured to use the antenna array (103) for wireless communication over the communication network.

14. Measurement card (100) according to one of the preceding claims, further comprising a tuning circuit (209) for tuning a reception frequency of the antenna array (103).

## Revendications

1. Carte de mesure (100), destinée à détecter une valeur de mesure d'un champ électromagnétique, comportant :
un corps de carte de mesure (101) ;
un système d'antennes (103) intégré au corps de carte de mesure (101) et destiné à recevoir le champ électromagnétique ;
un processeur (105) disposé sur le corps de carte de mesure (101) et destiné à déterminer une valeur de mesure du champ électromagnétique reçu, dans laquelle le processeur (105) est conçu pour générer un signal d'émission avec la valeur de mesure conformément à une technologie de transmission sans fil ;
une interface de communication sans fil (107) disposée sur le corps de carte de mesure (101) et destinée à émettre le signal d'émission sur un réseau de communication conformément à la technologie de transmission sans fil ; et
un circuit redresseur (109) qui est monté en aval de l'antenne de réception et qui est conçu pour obtenir de l'énergie électrique à partir du champ électromagnétique reçu, et pour alimenter avec l'énergie électrique reçue le processeur (105) destiné à déterminer la valeur de mesure et à générer le signal d'émission, ainsi que l'interface de communication sans fil (107) destinée à émettre le signal d'émission, **caractérisée en ce que** la carte de mesure (100) comporte en outre une charge électrique commandable (233), dans laquelle le processeur (105) est conçu pour régler une valeur de charge de la charge électrique commandable (233), dans laquelle l'interface de communication sans fil (107) est conçue pour recevoir un paramètre de charge par l'intermédiaire du réseau de communication, et dans laquelle le processeur (105) est conçu pour régler la valeur de la charge électrique commandable (233) conformément au paramètre de charge reçu.

2. Carte de mesure (100) selon la revendication 1, dans laquelle le corps de carte de mesure (101) présente la forme d'une carte-chèque ou l'un des formats suivants : ID1, ID2 ou ID3.

3. Carte de mesure (100) selon la revendication 1 ou 2, dans laquelle la technologie de transmission sans fil est l'une des technologies de transmission sans fil suivantes : Bluetooth, Bluetooth basse énergie, ZigBee, technologie de transmission en champ proche.

4. Carte de mesure (100) selon l'une des revendications précédentes, dans laquelle le processeur et l'interface de communication sans fil (107) sont intégrés dans une puce de communication, en particulier dans une puce Bluetooth.

5. Carte de mesure (100) selon l'une des revendications précédentes, dans laquelle le système d'antennes (103) comprend une bobine d'antenne (201, 203) noyée dans le corps de carte de mesure (101) ou disposée sur une surface du corps de carte de mesure (100) et destinée à recevoir le champ électromagnétique, dans laquelle la bobine d'antenne (201, 203) est couplée au redresseur (213) pour l'obtention d'énergie et au processeur (105) pour l'acquisition de valeurs de mesure.

6. Carte de mesure (100) selon l'une des revendications 1 à 4 précédentes, dans laquelle le système d'antennes (103) comprend une première bobine d'antenne (201) noyée dans le corps de carte de mesure (101) ou disposée sur une surface du corps de carte de mesure (101) et une deuxième bobine d'antenne (203) noyée dans le corps de carte de mesure (101) ou disposée sur une surface du corps de carte de mesure (101), dans laquelle la première bobine d'antenne (201) est couplée au redresseur (213) pour l'obtention d'énergie, et dans laquelle la deuxième bobine d'antenne (203) est couplée au processeur (105) pour la détection de la valeur de mesure.

7. Carte de mesure (100) selon l'une des revendications précédentes, dans laquelle le circuit redresseur (109) comporte un accumulateur d'énergie (225) destiné à stocker l'énergie obtenue, et dans laquelle l'accumulateur d'énergie (225) est prévu pour alimenter, avec l'énergie électrique stockée dans l'accumulateur d'énergie (225), le processeur (105) destiné à déterminer la valeur de mesure et à générer le signal d'émission et/ou l'interface de communication sans fil (107) destinée à émettre le signal d'émission.

8. Carte de mesure (100) selon la revendication 7, dans laquelle le processeur (105) est conçu pour déterminer la valeur de mesure et pour générer le signal d'émission au cours d'un premier intervalle de temps avec l'énergie stockée dans l'accumulateur d'énergie (225), dans laquelle le circuit redresseur (109) est conçu pour charger l'accumulateur d'énergie (225) avec l'énergie électrique obtenue à partir du champ électromagnétique reçu au cours d'un deuxième intervalle de temps qui suit le premier intervalle de temps, et dans laquelle l'interface de communication sans fil (107) est conçue pour émettre le signal d'émission avec l'énergie stockée dans l'accumulateur d'énergie (225), au cours d'un troisième intervalle de temps qui suit le deuxième intervalle de temps.

9. Carte de mesure (100) selon l'une des revendications précédentes, dans laquelle la valeur de charge est une impédance.

10. Carte de mesure (100) selon l'une des revendications précédentes, dans laquelle la charge électrique commandable (233) présente une première impédance de charge commutable et une deuxième impédance de charge commutable, et dans laquelle le processeur (105) est conçu pour commuter la première impédance de charge ou la deuxième impédance de charge.

11. Carte de mesure (100) selon l'une des revendications précédentes, qui comporte en outre un affichage optique (231) destiné à afficher la valeur de mesure électrique et/ou un état de la carte de mesure.

12. Carte de mesure (100) selon l'une des revendications précédentes, dans laquelle la valeur de mesure électrique est une intensité de champ du champ électromagnétique reçu.

13. Carte de mesure (100) selon l'une des revendications précédentes, dans laquelle l'interface de communication sans fil (107) comprend une antenne de communication destinée à une communication sans fil sur le réseau de communication, ou dans laquelle l'interface de communication (107) est conçue pour utiliser le système d'antennes (103) pour une communication sans fil sur le réseau de communication.

14. Carte de mesure (100) selon l'une des revendications précédentes, comportant en outre un circuit d'accord (209) pour l'accord d'une fréquence de réception du système d'antennes (103).
